# EUROPÄISCHE PATENTSCHRIFT

(11) **EP 2 694 315 B1**
(45) Veröffentlichungstag und Bekanntmachung des Hinweises auf die Patenterteilung: **29.06.2016**
(21) Anmeldenummer: 12715036.5
(22) Anmeldetag: 04.04.2012
(51) Int. Cl.: B60K 31/00, B62D 15/02, G08G 1/16, B60W 30/06

(54) **ROLLRICHTUNGSBASIERTES PARKASSISTENZSYSTEM**
PARKING ASSISTANCE SYSTEM BASED ON ROLLING DIRECTION
SYSTÈME D'ASSISTANCE AU STATIONNEMENT, BASÉ SUR LA DIRECTION DE DÉPLACEMENT DU VÉHICULE

(30) Priorität: 08.04.2011 DE 102011007016
(43) Veröffentlichungstag der Anmeldung: 12.02.2014
(73) Patentinhaber: Robert Bosch GmbH, 70442 Stuttgart (DE)
(72) Erfinder: GRUETZMANN, Andreas, 70176 Stuttgart (DE); SCHNEIDER, Marcus, 71642 Ludwigsburg (DE)
(86) Internationale Anmeldenummer: PCT/EP2012/056205
(87) Internationale Veröffentlichungsnummer: WO 2012/136721

(56) Entgegenhaltungen:
- EP-A2- 2 258 606
- WO-A1-2005/120932
- DE-A1-102009 027 289
- DE-A1-102009 027 941
- GB-A- 2 473 551
- US-A1- 2008 154 464
- US-A1- 2008 154 464
- US-A1- 2009 259 365

## Beschreibung

Die vorliegende Erfindung betrifft ein Parkassistenzsystem und -verfahren für ein Fahrzeug.

### Stand der Technik

Bei so genannten selbstlenkenden Parkassistenten braucht der Fahrer das Lenkrad des Fahrzeugs nicht mehr selbst drehen, sondern muss lediglich vorwärts und/oder rückwärts rangieren. Das Umlenken des Lenkrads wird dabei von dem Parkassistenten durch Ansteuern der elektrischen Lenkung (EPS) des Fahrzeugs übernommen.

Der Umlenkzeitpunkt wird dabei herkömmlicherweise entweder anhand der Wahl des Gangs, insbesondere eines Vorwärtsgangs oder des Rückwärtsgangs, oder anhand einer, beispielsweise vom ABS/ESP, detektierten Rollrichtung bestimmt.

Üblicherweise wird dabei das Lenkrad des zu parkenden Fahrzeugs so bewegt, dass durch mehrere Vorwärts- und Rückwärtszüge der Abstand und Winkel zum Bordstein vergrößert wird und ein kollisionsfreies Ausfahren aus einer Parklücke möglich ist.

Ein automatisches Einparksystem hingegen beschreibt die US 2008/154464 A1. In diesem Dokument wird eine Steuereinrichtung für ein Fahrzeug offenbart, welche über Lenkrad-, Bewegungs- und Stoppeinrichtungen verfügt und mittels eines zweizügigen Einparkverfahrens automatisch in eine Parklücke rangiert.

### Offenbarung der Erfindung

### Neue Beschreibungsseite 1a

Gegenstand der vorliegenden Erfindung ist ein automatisch lenkendes Parkassistenzsystem, insbesondere Auspark- und/oder Einparkassistenzsystem, für ein Fahrzeug, welches ein Sensorsystem zum Messen von Abstandsdaten zwischen dem Fahrzeug und seiner Umgebung, ein Antiblockiersystem und/oder elektronisches Stabilitätsprogramm als Rollrichtungsdetektor zum Detektieren der Rollrichtung des Fahrzeugs und eine Prozessierungseinrichtung umfasst, welche anhand der gemessenen Abstandsdaten eine Parklücke ermittelt, eine beim Parkvorgang in die Parklücke zu durchlaufende Trajektorie berechnet und beim Parkvorgang eine Lenkeinrichtung des Fahrzeugs entsprechend der berechneten Trajektorie automatisch steuert, insbesondere um das Fahrzeug ohne einen Lenkeingriff des Fahrers zu lenken.

Erfindungsgemäß wird dabei nach einem vom Rollrichtungsdetektor detektierten Wechsel der Rollrichtung ein vor dem Rollrichtungswechsel eingestellter Lenkwinkel der Lenkeinrichtung für einen bestimmten ersten Streckenabschnitt beibehalten. Mit anderen Worten, der Lenkwinkel ist beim Durchfahren des ersten Streckenabschnitts konstant und wird erst beim Durchfahren eines darauf folgenden Streckenabschnitts verändert. Unter dem Lenkwinkel kann dabei insbesondere der Winkel zwischen der Ebene eines lenkbaren Rades des Fahrzeugs und der Geradeauslaufstellung des Fahrzeugs verstanden werden.

Das erfindungsgemäße Parkassistenzsystem hat den Vorteil, dass der Fahrer auch am Hang "flüssig" ausparken kann. Beim Parken von Schaltgetriebefahrzeugen in Hanglage ist dabei vorteilhafterweise ein Wechseln des Gangs durch den Fahrer, welches hierbei häufig als unnötig und bremsend betrachtet wird, nicht mehr nötig. Dies liegt darin begründet, dass beim Parken eines Schaltgetriebefahrzeugs in Hanglage die Rollrichtung durch mehr oder weniger starkes Betätigen des Kupplungspedals gewechselt werden kann, wobei das Fahrzeug beim Drücken des Kupplungspedals hangabwärts und beim Loslassen des Kupplungspedals hangaufwärts rollt. Die Verwendung von Rollrichtungsinformationen anstelle von Gangrichtungsinformationen ist daher beim Parken in Hanglagen besonders vorteilhaft. Dass der Lenkwinkel im ersten Streckenabschnitt beibehalten wird hat dabei den Vorteil, dass Störungen, welche aus einer unterschiedlichen Detektion beziehungsweise Wahrnehmung von Rollrichtungsänderungen seitens des Rollrichtungsdetektors, zum Beispiel eines ABS/ESP, und seitens des Fahrer resultieren vermieden werden können. Der "Moment" der Rollrichtungsumkehr ist aus Fahrzeugsicht nämlich häufig kein einzelner Moment, weil der Rollrichtungsdetektor meist zunächst mehrere Rollrichtungswechsel detektiert bevor das Fahrzeug einen für den Fahrer wahrnehmbaren Rollrichtungswechsel vornimmt. Der Grund hierfür ist, dass der Fahrer beim Parkvorgang in Hanglage mit der Kupplung "spielt", um möglichst kontrolliert an die Parklückengrenzen heran zu rollen. Kurz vor dem Moment, an dem der Fahrer die Rollrichtung endgültig wechseln will, besitzt das Fahrzeug dann eine sehr geringe Geschwindigkeit. Nun reicht eine geringfügige Änderung des Radmoments - beispielsweise hervorgerufen durch die Änderung des Kupplungsmoments durch den Fahrer - aus, dass eine kurzzeitige Änderung der Rollrichtung auftritt. In der Folge kann bei Parksystemen ohne die erfindungsgemäße Vorkehrung das Lenkrad mehrfach hin- und her lenken, ohne dass aus Fahrersicht ein Grund hierfür vorliegt. Durch die erfindungsgemäße Vorkehrung kann dies vorteilhafterweise vermieden werden. Dies hat wiederum den Vorteil, dass der Fahrer nicht durch das Verhalten des Parkassistenzsystems irritiert und zudem eine unnötige Beanspruchung der elektrischen Lenkung des Fahrzeugs vermieden werden kann. Besonders vorteilhaft ist das erfindungsgemäße Parkassistenzsystem beim Parken in kleinen Parklücken in Hanglage.

Im Rahmen einer Ausführungsform wird beim Durchfahren eines an den ersten Streckenabschnitt anschließenden zweiten Streckenabschnitts der Lenkwinkel, bezogen auf den Lenkwinkel, des ersten Streckenabschnitts, verändert.

Im Rahmen einer Ausgestaltung dieser Ausführungsform ist der Lenkwinkel des zweiten Streckenabschnitts im Wesentlichen Null Grad beziehungsweise entspricht der Neutralstellung. So kann vorteilhafterweise erreicht werden, dass beim nächsten Fahrzug der Winkel zu einer seitlichen Parklückenbegrenzung, beispielsweise einem Bordstein vergrößert und gleichzeitig die elektrische Lenkung des Fahrzeugs geschont werden kann.

Im Rahmen einer anderen Ausgestaltung dieser Ausführungsform weist der Lenkwinkel, des zweiten Streckenabschnitts, insbesondere bezogen auf die Neut-ralstellung, ein anderes Vorzeichen als der Lenkwinkel, des ersten Streckenabschnitts auf. Dies hat den Vorteil, dass das Parken mit weniger Parkzügen und damit schneller erfolgen kann. Insbesondere kann dabei der Lenkwinkel bei einer Auslenkung des Lenkrades nach links ein positives Vorzeichen und bei einer Auslenkung des Lenkrades nach rechts ein negatives Vorzeichen aufweisen. Unter "im Wesentlichen" kann dabei insbesondere verstanden werden, dass geringfügige Abweichungen von exakt Null Grad, beispielsweise um ± 5°, umfasst sind.

Im Rahmen einer weiteren Ausführungsform wird beim Durchfahren eines an den zweiten Streckenabschnitt anschließenden dritten Streckenabschnitts der Lenkwinkel, bezogen auf den Lenkwinkel, des ersten und/oder zweiten Streckenabschnitts, verändert. Vorzugsweise ist dabei der Lenkwinkel, des zweiten Streckenabschnitts im Wesentlichen Null Grad, wobei der Lenkwinkel des dritten Streckenabschnitts ein anderes Vorzeichen als der Lenkwinkel, des ersten Streckenabschnitts aufweist. Auf diese Weise können die zuvor beschriebenen Vorteile vorteilhafterweise kombiniert werden.

Im Rahmen einer weiteren Ausführungsform wird der Lenkwinkel beim Durchfahren des zweiten und/oder dritten Streckenabschnitts schrittweise oder kontinuierlich geändert. Unter einer schrittweisen Änderung kann dabei insbesondere eine Umsetzung in diskreten Stufen verstanden werden, wobei der Lenkwinkel beim Überfahren von bestimmten Teilstreckenabschnitten jeweils neu eingestellt wird. Unter einer kontinuierlichen Änderung kann insbesondere eine Umsetzung als kontinuierliche Funktion des Wegs verstanden werden, bei welcher der Lenkwinkel eine kontinuierliche Funktion der grollten Strecke ist.

Im Rahmen einer weiteren Ausführungsform wird der Lenkwinkel zwischen dem ersten und zweiten Streckenabschnitt und/oder dem zweiten und dritten Streckenabschnitt schrittweise, beispielsweise um einen Schritt von mehr als 15°, geändert. Hierdurch kann der Parkvorgang noch besser an die Gegebenheiten der entsprechenden Parklücke angepasst werden.

Im Rahmen einer weiteren Ausführungsform wird beim Umschalten durch den Fahrer zwischen Vorwärts- und Rüc4cwärtsgang beziehungsweise zwischen Rückwärts- und Vorwärtsgang der vor dem Rollrichtungswechsel eingestellte Lenkwinkel bereits beim Durchfahren des ersten Streckenabschnitts, insbesondere schrittweise oder kontinuierlich, verändert. Hierdurch kann vorteilhafterweise der Parkvorgang in der Ebene sowie von Fahrern, welche ein Einparken in Hanglage ohne Kupplungstechnik bevorzugen, beschleunigt und vereinfacht werden.

Des weiteres ist es vorteilhaft, die Strecke welche das Fahrzeug entgegen der Ganginformation rollen darf zu begrenzen. "Entgegengesetzt" bedeutet dabei, dass die Gangrichtungsinformation, zum Beispiel "R": Rückwärtsgang, nicht der Rollrichtungsinformation, zum Beispiel vorwärts, entspricht. Vorzugsweise wird das Parkassistenzsystem abgebrochen beziehungsweise beendet, wenn eine unter entgegen gesetzter Rollrichtung und Gangrichtung überfahrene Wegstrecke einen bestimmten Grenzwert, beispielsweise von 1,5 m, überschreitet. So kann vorteilhafterweise ein besonders sicheres System zur Verfügung gestellt werden.

Vorzugsweise sind die Lenkwinkel, und/oder Streckenabschnittslängen und/oder Lenkwinkeländerungen, insbesondere des ersten, zweiten beziehungsweise dritten Streckenabschnitts, abhängig von beispielsweise dem vorliegenden/erreichten Winkel zum Bordstein, von der Anzahl der bereits durchgeführten Vorwärts-/Rückwärtsmanöver, der gefahrenen Strecke, dem Abstand zum Bordstein, dem Abstand zu den Parklückenbegrenzungen und/oder den Ausdehnungen der Parklückenbegrenzungen gestaltet.

Erfindungsgemäss ist der Rollrichtungsdetektor ein Antiblockiersystem (ABS) und/oder elektronisches Stabilitätsprogramm (ESP). Eine Nutzung der Rollrichtungsinformationen des ABS und/oder ESP-Systems hat den Vorteil, dass keine zusätzlichen Detektoren in das Fahrzeug integriert werden müssen.

Das Sensorsystem kann zum Beispiel einen oder mehrere Abstandssensoren aufweisen, welche zum Beispiel ausgewählt sind aus der Gruppe bestehend aus akustischen Abstandssensoren, insbesondere Ultraschallsensoren, optischen Abstandssensoren, beispielsweise Videosensoren, Infrarot- und UV-Abstandssensoren, Radarsensoren und Kombinationen davon.

Hinsichtlich weiterer Vorteile und Merkmale des erfindungsgemäßen Systems wird hiermit explizit auf die Erläuterungen im Zusammenhang mit dem erfindungsgemäßen Verfahren und den Figuren verwiesen.

Ein weiterer Gegenstand der vorliegenden Erfindung ist ein automatisch lenkendes Parkassistenzverfahren, insbesondere Auspark- und/oder Einparkassistenzverfahren, für ein Fahrzeug, umfassend die Verfahrensschritte:
- Messen von Abstandsdaten zwischen dem Fahrzeug und seiner Umgebung, beispielsweise durch ein Sensorsystem,
- Detektieren der Rollrichtung des Fahrzeugs, beispielsweise durch einen Rollrichtungsdetektor,
- Ermitteln einer Parklücke anhand der gemessenen Abstandsdaten, beispielsweise durch eine Prozessierungseinrichtung,
- Berechnen einer beim Parkvorgang in die Parklücke zu durchlaufende Trajektorie, beispielsweise durch die Prozessierungseinrichtung, und
- Automatisches Steuern einer Lenkeinrichtung des Fahrzeugs beim Parkvorgang entsprechend der berechneten Trajektorie, beispielsweise durch die Prozessierungseinrichtung.

Erfindungsgemäß wird dabei nach einem vom Rollrichtungsdetektor detektierten Wechsel der Rollrichtung ein vor dem Rollrichtungswechsel eingestellter Lenkwinkel der Lenkeinrichtung für einen bestimmten ersten Streckenabschnitt beibehalten.

Hinsichtlich der Vorteile und weiterer Merkmale des erfindungsgemäßen Verfahrens wird hiermit explizit auf die Erläuterungen im Zusammenhang mit dem erfindungsgemäßen System und den Figuren verwiesen.

Im Rahmen einer Ausführungsform beim Durchfahren eines an den ersten Streckenabschnitt anschließenden zweiten Streckenabschnitts der Lenkwinkel, bezogen auf den Lenkwinkel des ersten Streckenabschnitts, verändert wird. Vorzugsweise ist dabei der Lenkwinkel des zweiten Streckenabschnitts im Wesentlichen Null Grad (Neutralstellung) oder weist, insbesondere bezogen auf die Neutralstellung, ein anderes Vorzeichen als der Lenkwinkel des ersten Streckenabschnitts auf. Dabei kann unter "im Wesentlichen" verstanden werden, dass geringfügige Abweichungen von exakt Null Grad, beispielsweise um ± 5°, umfasst sind.

Im Rahmen einer weiteren Ausführungsform wird beim Durchfahren eines an den zweiten Streckenabschnitt anschließenden dritten Streckenabschnitts der Lenkwinkel, bezogen auf den Lenkwinkel des ersten und/oder zweiten Streckenabschnitts, verändert. Vorzugsweise ist dabei der Lenkwinkel des zweiten Streckenabschnitts im Wesentlichen Null Grad, wobei der Lenkwinkel des dritten Streckenabschnitts ein anderes Vorzeichen als der Lenkwinkel, des ersten Streckenabschnitts aufweist.

Im Rahmen einer weiteren Ausführungsform wird der Lenkwinkel beim Durchfahren des zweiten und/oder dritten Streckenabschnitts schrittweise oder kontinuierlich geändert.

Im Rahmen einer weiteren Ausführungsform wird der Lenkwinkel zwischen dem ersten und zweiten Streckenabschnitt und/oder dem zweiten und dritten Streckenabschnitt schrittweise, beispielsweise um einen Schritt von mehr als15 °, geändert.

Im Rahmen einer weiteren Ausführungsform wird beim Umschalten durch den Fahrer zwischen Vorwärts- und Rückwärtsgang beziehungsweise zwischen Rückwärts- und Vorwärtsgang der vor dem Rollrichtungswechsel eingestellte Lenkwinkel bereits beim Durchfahren des ersten Streckenabschnitts schrittweise oder kontinuierlich verändert.

Im Rahmen einer weiteren Ausführungsform wird das Parkassistenzsystem abgebrochen, wenn eine unter entgegen gesetzter Rollrichtung und Gangrichtung überfahrene Wegstrecke einen bestimmten Grenzwert, beispielsweise von 1,5 m, überschreitet.

Vorzugsweise werden die Lenkwinkel, und/oder Streckenabschnittslängen und/oder Lenkwinkeländerungen, insbesondere des ersten, zweiten beziehungsweise dritten Streckenabschnitts, in Abhängigkeit von beispielsweise dem vorliegenden/erreichten Winkel zum Bordstein, von der Anzahl der bereits durchgeführten Vorwärts-/Rückwärtsmanöver, der gefahrenen Strecke, dem Abstand zum Bordstein, dem Abstand zu den Parklückenbegrenzungen und/oder den Ausdehnungen der Parklückenbegrenzungen eingestellt.

Ein weiterer Gegenstand der Erfindung ist ein Fahrzeug, insbesondere Kraftfahrzeug, welches ein erfindungsgemäßes Parksystem umfasst und ein Computerprogramm und/oder ein Datenträger, welches es einem Prozessor ermöglicht, ein erfindungsgemäßes Verfahren durchzuführen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Draufsicht auf ein Fahrzeug beim Parkvorgang, welches mit einer Ausführungsform eines erfindungsgemäßen Parksystems ausgestattet ist; und
- Fig. 2a-c: schematische Ansichten des Lenkrads und der Räder der lenkbaren Achse eines Fahrzeugs bei einem Lenkeinschlag nach links, in Neutralstellung und bei einem Lenkeinschlag nach rechts.

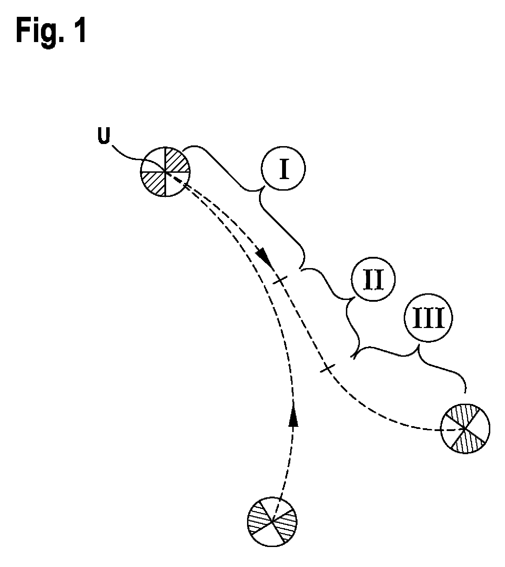

Figur 1 veranschaulicht das Lenkverhalten eines mit einer Ausführungsform eines erfindungsgemäßen Parkassistenzsystems ausgestatteten Fahrzeugs beim Wechsel von einem Vorwärts- in einen Rückwärtszug für den Mittelpunkt der Fahrzeughinterachse, zum Beispiel beim Ausparken aus einer Parklücke. In der gezeigten Ausführungsform erfolgen der Umlenkzeitpunkt und die Richtung des Umlenkvorgangs dadurch, dass anstelle einer Ganginformation die momentane Rollrichtung zur Bestimmung des Lenkvorgangs herangezogen wird.

Zum Ausparken werden im dargestellten Beispiel das Lenkrad und damit die Räder der lenkbaren Achse, beispielsweise die Vorderräder, zunächst von einer seitlichen Parklückenbegrenzung, zum Beispiel einem Bordstein (rechts von Figur 1), weggelenkt, wobei sich das Fahrzeug vorwärts bewegt. Ab dem Umkehrpunkt U erfolgt eine Rüc4cwärtsbewegung des Fahrzeugs, während der das Lenkrad und die lenkbaren Räder in Richtung auf die seitliche Parklückenbegrenzung gelenkt werden. Dadurch vergrößern sich der Winkel und der Abstand zur seitlichen Parklückenbegrenzung. Derartige Vor- und Rückwärtszüge können so lange wiederholt werden bis ein kollisionsfreies Ausfahren aus der Parklücke möglich ist.

Figur 1 zeigt insbesondere, dass das Fahrzeug zuerst auf einer Kurve vorwärts rollt. Der Radius der Kurve ergibt sich durch einen Lenkwinkel, der bei der Vorwärtsbewegung das Fahrzeug von einer Parklückenbegrenzung, beispielsweise einem Bordstein, (rechts von Figur 1) weg bewegt. Im Umkehrpunkt U beginnt das Fahrzeug sich Rückwärts zu bewegen, was von der Rollrichtungssensorik des ABS/ESP-Systems detektiert, aber nicht unbedingt vom Fahrer wahrgenommen wird, weshalb bei andersartig ausgestalteten Parkassistenzsystemen in diesem Bereich für den Fahrer unerklärliche Lenkradbewegungen auftreten können. Diese Rollrichtungsinformationen werden an die Prozessierungseinrichtung übermittelt.

Um ein unnötiges beziehungsweise versehentliches Umlenken des Lenkrads aufgrund des "Spielens" mit der Kupplung zu verhindern, führt ein Wechsel der Rollrichtung erfindungsgemäß nicht sofort zu einem Umlenken. Stattdessen erfolgt der Umlenkvorgang wegabhängig, das heißt für einen ersten Streckenabschnitt I, welcher zum Beispiel 10 cm betragen kann, wird das Lenkrad zuerst nicht umgelenkt. Daher bewegt sich das Fahrzeug zunächst auf demselben Kreisbogen wieder zurück, welchen es während des Vorwärtszugs beschrieben hat.

Beim Erreichen des zweiten Streckenabschnitts II kann das Lenkrad, wie in Figur 1 gezeigt gerade beziehungsweise in den Lenkwinkel von Null Grad gestellt werden. Dies hat zur Folge, dass sich beim nächsten Vorwärtszug der Winkel zur Parklückenbegrenzung auf der rechten Seite, zum Beispiel dem Bordstein, weiter vergrößert, ohne dass die elektrische Lenkung übermäßig beansprucht wird. Der zweite Streckenabschnitt II kann zum Beispiel 50 cm betragen.

Bei Erreichen des dritten Streckenabschnitts III wird das Lenkrad weiter zur seitlichen Parklückenbegrenzung, zum Beispiel zum Bordstein, hin umgelenkt, um den Fahrzeugwinkel hierzu weiter zu erhöhen.

Im Fall einer Kopplung mit der Ganginformation kann der Fahrer den ersten I und II Streckenabschnitt umgehen, beispielsweise in dem er einen Gang einlegt: Das Lenkrad kann dann direkt voll in Richtung auf die Parklückenbegrenzung, zum Beispiel dem Bordstein, hin umgelenkt werden, so dass sich das Fahrzeug sofort auf den dritten Streckenabschnitt III begibt. Dabei ist es denkbar, den zweiten Streckenabschnitt II bei Beibehaltung des dritten Streckenabschnitts III, oder umgekehrt den dritten Streckenabschnitt III bei Beibehaltung des zweiten Streckenabschnitts II, entfallen zu lassen.

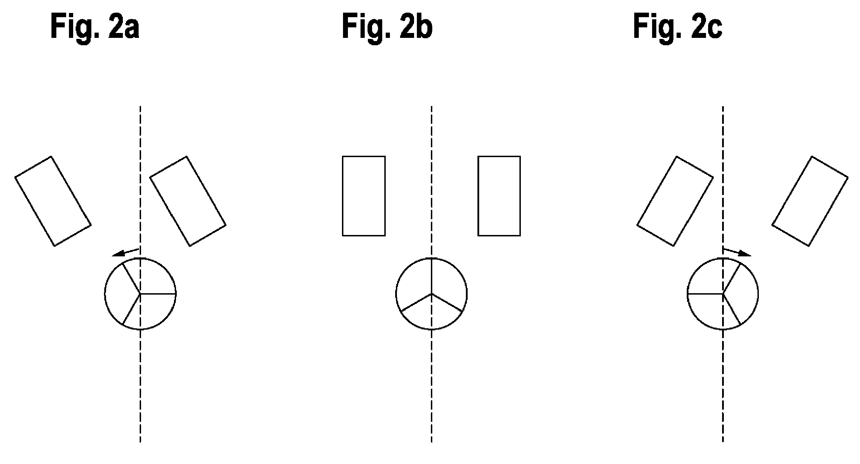

Die Figuren 2a bis 2c zeigen schematische Ansichten des Lenkrads und der Räder der lenkbaren Achse eines Fahrzeugs. Figur 2b zeigt, dass das Lenkrad und die Räder in Neutralstellung, also in einem Lenkwinkel von Null Grad. Figur 2a zeigt das gleiche Fahrzeug während einer Linksdrehung. Der Lenkwinkel, kann hierbei als Winkel mit positivem Vorzeichen verstanden werden. Figur 2c zeigt das gleiche Fahrzeug während einer Rechtsdrehung. Der Lenkwinkel, kann hierbei als Winkel mit negativem Vorzeichen, also mit einem zu dem von Figur 2a umgekehrten Vorzeichen, verstanden werden.

## Patentansprüche

1. Automatisch lenkendes Parkassistenzsystem, insbesondere Auspark- und/oder Einparkassistenzsystem, für ein Fahrzeug, umfassend
- ein Sensorsystem zum Messen von Abstandsdaten zwischen dem Fahrzeug und seiner Umgebung,
- ein Antiblockiersystem und/oder elektronisches Stabilitätsprogramm als Rollrichtungsdetektor zum Detektieren der Rollrichtung des Fahrzeugs und
- eine Prozessierungseinrichtung, welche anhand der gemessenen Abstandsdaten eine Parklücke ermittelt, eine beim Parkvorgang in die Parklücke zu durchlaufende Trajektorie berechnet und beim Parkvorgang eine Lenkeinrichtung des Fahrzeugs entsprechend der berechneten Trajektorie automatisch steuert, und
wobei nach einem vom Rollrichtungsdetektor detektierten Wechsel der Rollrichtung ein vor dem Rollrichtungswechsel eingestellter Lenkwinkel der Lenkeinrichtung für einen bestimmten ersten Streckenabschnitt (I) beibehalten wird.

2. Parkassistenzsystem nach Anspruch 1, wobei beim Durchfahren eines an den ersten Streckenabschnitt (I) anschließenden zweiten Streckenabschnitts (II) der Lenkwinkel, bezogen auf den Lenkwinkel des ersten Streckenabschnitts (I), verändert wird.

3. Parkassistenzsystem nach Anspruch 1 oder 2, wobei der Lenkwinkel des zweiten Streckenabschnitts (II) im Wesentlichen Null Grad ist oder ein anderes Vorzeichen als der Lenkwinkel des ersten Streckenabschnitts (I) aufweist.

4. Parkassistenzsystem nach einem der Ansprüche 1 bis 3, wobei beim Durchfahren eines an den zweiten Streckenabschnitt (II) anschließenden dritten Streckenabschnitts (III) der Lenkwinkel, bezogen auf den Lenkwinkel des ersten (I) und/oder zweiten (II) Streckenabschnitts, verändert wird, insbesondere wobei der Lenkwinkel des zweiten Streckenabschnitts (II) im Wesentlichen Null Grad ist und der Lenkwinkel des dritten Streckenabschnitts (III) ein anderes Vorzeichen als der Lenkwinkel des ersten Streckenabschnitts (I) aufweist.

5. Parkassistenzsystem nach einem der Ansprüche 2 bis 4, wobei der Lenkwinkel beim Durchfahren des zweiten (II) und/oder dritten (III) Streckenabschnitts schrittweise oder kontinuierlich geändert wird.

6. Parkassistenzsystem nach einem der Ansprüche 2 bis 5, wobei der Lenkwinkel zwischen dem ersten (I) und zweiten (II) Streckenabschnitt und/oder dem zweiten (II) und dritten (III) Streckenabschnitt schrittweise, beispielsweise um einen Schritt von mehr als 15 °, geändert wird.

7. Parkassistenzsystem nach einem der Ansprüche 1 bis 6, wobei beim Umschalten durch den Fahrer zwischen Vorwärts- und Rückwärtsgang beziehungsweise zwischen Rückwärts- und Vorwärtsgang der vor dem Rollrichtungswechsel eingestellte Lenkwinkel bereits beim Durchfahren des ersten Streckenabschnitts (I) verändert wird.

8. Automatisch lenkendes Parkassistenzverfahren, insbesondere Auspark- und/oder Einparkassistenzverfahren, für ein Fahrzeug, umfassend die Verfahrensschritte:
- Messen von Abstandsdaten zwischen dem Fahrzeug und seiner Umgebung,
- Detektieren der Rollrichtung des Fahrzeugs durch ein Antiblockiersystem und/oder elektronisches Stabilitätsprogramm,
- Ermitteln einer Parklücke anhand der gemessenen Abstandsdaten,
- Berechnen einer beim Parkvorgang in die Parklücke zu durchlaufende Trajektorie, und
- Automatisches Steuern einer Lenkeinrichtung des Fahrzeugs beim Parkvorgang entsprechend der berechneten Trajektorie, wobei nach einem vom Rollrichtungsdetektor detektierten Wechsel der Rollrichtung ein vor dem Rollrichtungswechsel eingestellter Lenkwinkel der Lenkeinrichtung für einen bestimmten ersten Streckenabschnitt (I) beibehalten wird.

9. Parkassistenzverfahren nach Anspruch 8, wobei beim Durchfahren eines an den ersten Streckenabschnitt (I) anschließenden zweiten Streckenabschnitts (II) der Lenkwinkel, bezogen auf den Lenkwinkel des ersten Streckenabschnitts (I), verändert wird, insbesondere wobei der Lenkwinkel des zweiten Streckenabschnitts (II) im Wesentlichen Null Grad ist oder ein anderes Vorzeichen als der Lenkwinkel des ersten Streckenabschnitts (I) aufweist.

10. Parkassistenzverfahren nach Anspruch 9, wobei beim Durchfahren eines an den zweiten Streckenabschnitt (II) anschließenden dritten Streckenabschnitts (III) der Lenkwinkel, bezogen auf den Lenkwinkel des ersten (I) und/oder zweiten (II) Streckenabschnitts, verändert wird, insbesondere wobei der Lenkwinkel des zweiten Streckenabschnitts (II) im Wesentlichen Null Grad ist und der Lenkwinkel des dritten Streckenabschnitts (III) ein anderes Vorzeichen als der Lenkwinkel des ersten Streckenabschnitts (I) aufweist.

11. Parkassistenzverfahren nach Anspruch 9 oder 10, wobei der Lenkwinkel beim Durchfahren des zweiten (II) und/oder dritten (III) Streckenabschnitts schrittweise oder kontinuierlich geändert wird.

12. Parkassistenzverfahren nach einem der Ansprüche 9 bis 11, wobei der Lenkwinkel zwischen dem ersten (I) und zweiten (II) Streckenabschnitt und/oder dem zweiten (II) und dritten (III) Streckenabschnitt schrittweise, beispielsweise um einen Schritt von mehr als 15 °, geändert wird.

13. Parkassistenzverfahren nach einem der Ansprüche 8 bis 12, wobei beim Umschalten durch den Fahrer zwischen Vorwärts- und Rückwärtsgang beziehungsweise zwischen Rückwärts- und Vorwärtsgang der vor dem Rollrichtungswechsel eingestellte Lenkwinkel bereits beim Durchfahren des ersten Streckenabschnitts (I) schrittweise oder kontinuierlich verändert wird.

14. Parkassistenzverfahren nach einem der Ansprüche 8 bis 13, wobei das Parkassistenzverfahren abgebrochen wird, wenn eine unter entgegen gesetzter Rollrichtung und Gangrichtung überfahrene Wegstrecke einen bestimmten Grenzwert überschreitet.

## Claims

1. Automatically steering parking assistance system, particularly an assistance system for leaving and/or parking in a parking space, for a vehicle, comprising
- a sensor system for measuring distance data between the vehicle and its surroundings,
- an antilock braking system and/or electronic stability control as a rolling-direction detector for detecting the rolling direction of the vehicle, and
- a processing device that takes the measured distance data as a basis for ascertaining a parking space, computes a trajectory to be taken into the parking space during the parking manoeuvre and automatically controls a steering device of the vehicle during the parking manoeuvre in accordance with the computed trajectory, and
wherein after a change that the rolling-direction detector detects in the rolling direction, a steering angle that was selected for the steering device before the change of rolling direction is retained for a particular first path section (I).

2. Parking assistance system according to Claim 1, wherein when a second path section (II), which adjoins the first path section (I), is taken, the steering angle is altered in relation to the steering angle for the first path section (I).

3. Parking assistance system according to Claim 1 or 2, wherein the steering angle for the second path section (II) is essentially zero degrees or has a different arithmetic sign from the steering angle for the first path section (I).

4. Parking assistance system according to one of Claims 1 to 3, wherein when a third path section (III), which adjoins the second path section (II), is taken, the steering angle is altered in relation to the steering angle for the first (I) and/or the second (II) path section, particularly wherein the steering angle for the second path section (II) is essentially zero degrees and the steering angle for the third path section (III) has a different arithmetic sign from the steering angle for the first path section (I).

5. Parking assistance system according to one of Claims 2 to 4, wherein the steering angle is changed gradually or continuously when the second (II) and/or the third (III) path section is taken.

6. Parking assistance system according to one of Claims 2 to 5, wherein the steering angle is changed gradually, for example by a step of more than 15°, between the first (I) and the second (II) path section and/or between the second (II) and the third (III) path section.

7. Parking assistance system according to one of Claims 1 to 6, wherein when the driver shifts between forward and reverse gears or between reverse and forward gears, the steering angle selected before the change of rolling direction is altered when the first path section (I) is actually taken.

8. Automatically steering parking assistance method, particularly an assistance method for leaving and/or parking in a parking space, for a vehicle, comprising the method steps of:
- measuring distance data between the vehicle and its surroundings,
- detecting the rolling direction of the vehicle using an antilock braking system and/or electronic stability control,
- ascertaining a parking space on the basis of the measured distance data,
- computing a trajectory to be taken into the parking space during the parking manoeuvre, and
- automatically controlling a steering device of the vehicle during the parking manoeuvre in accordance with the computed trajectory, wherein after a change that the rolling-direction detector detects in the rolling direction, a steering angle that was selected for the steering device before the change of rolling direction is retained for a particular first path section (I).

9. Parking assistance method according to Claim 8, wherein when a second path section (II), which adjoins the first path section (I), is taken, the steering angle is altered in relation to the steering angle for the first path section (I), particularly wherein the steering angle for the second path section (II) is essentially zero degrees or has a different arithmetic sign from the steering angle for the first path section(I).

10. Parking assistance method according to Claim 9, wherein when a third path section (III), which adjoins the second path section (II), is taken, the steering angle is altered in relation to the steering angle for the first (I) and/or the second (II) path section, particularly wherein the steering angle for the second path section (II) is essentially zero degrees and the steering angle for the third path section (III) has a different arithmetic sign from the steering angle for the first path section (I).

11. Parking assistance method according to Claim 9 or 10, wherein the steering angle is changed gradually or continuously when the second (II) and/or the third (III) path section is taken.

12. Parking assistance method according to one of Claims 9 to 11, wherein the steering angle is changed gradually, for example by a step of more than 15°, between the first (I) and the second (II) path section and/or between the second (II) and the third (III) path section.

13. Parking assistance method according to one of Claims 8 to 12, wherein when the driver shifts between forward and reverse gears or between reverse and forward gears, the steering angle selected before the change of rolling direction is altered gradually or continuously when the first path section (I) is actually taken.

14. Parking assistance method according to one of Claims 8 to 13, wherein the parking assistance method is terminated if a distance covered in an opposed rolling direction and gear direction exceeds a particular limit value.

## Revendications

1. Système d'assistance au stationnement à braquage automatique, en particulier système d'assistance à la sortie hors d'un emplacement de stationnement et/ou à l'entrée dans un emplacement de stationnement d'un véhicule, le système comprenant :
un système de capteurs qui mesure des données de distance entre le véhicule et son environnement,
un système anti-blocage et/ou un programme électronique de stabilisation, configurés comme détecteur de la direction de roulage détectant la direction de roulage du véhicule et
un dispositif de traitement qui, à l'aide des données de distance mesurées, détermine la présence d'un emplacement de stationnement, calcule une trajectoire à suivre lors de la manoeuvre de stationnement dans l'emplacement de stationnement et commande automatiquement lors de la manoeuvre de stationnement le dispositif de braquage du véhicule en correspondance à la trajectoire calculée et qui, après un changement de la direction de roulage détecté par le détecteur de direction de roulage, maintient un angle de braquage, établi avant le changement de direction de roulage, du dispositif de braquage pendant une première section définie (I) du parcours.

2. Système d'assistance au stationnement selon la revendication 1, dans lequel lorsqu'une deuxième section du parcours (II) qui suit la première section (I) du parcours est parcourue, l'angle de braquage est modifié par rapport à l'angle de braquage de la première section (I) du parcours.

3. Système d'assistance au stationnement selon les revendications 1 ou 2, dans lequel l'angle de braquage de la deuxième section (II) du parcours est essentiellement un angle de zéro degré ou présente un signe autre que l'angle de braquage de la première section (I) du parcours.

4. Système d'assistance au stationnement selon l'une des revendications 1 à 3, dans lequel lorsqu'une troisième section (III) du parcours qui se raccorde à la deuxième section (II) du parcours est parcourue, l'angle de braquage est modifié par rapport à l'angle de braquage de la première section (I) et/ou de la deuxième section (II) du parcours et en particulier, l'angle de braquage de la deuxième section (II) du parcours est essentiellement de zéro degré et l'angle de braquage de la troisième section (III) du parcours présente un autre signe que l'angle de braquage de la première section (I) du parcours.

5. Système d'assistance au stationnement selon l'une des revendications 2 à 4, dans lequel l'angle de braquage est modifié par pas ou de manière continue lorsque la deuxième section (II) et/ou la troisième section (III) du parcours sont parcourues.

6. Système d'assistance au stationnement selon l'une des revendications 2 à 5, dans lequel entre la première section (I) et la deuxième section (II) du parcours et/ou entre la deuxième section (II) et la troisième section (III) du parcours, l'angle de braquage est modifié par pas, par exemple d'un pas de plus de 15°.

7. Système d'assistance au stationnement selon l'une des revendications 1 à 6, dans lequel lorsque le conducteur passe d'un rapport de transmission avant à un rapport de transmission arrière ou d'un rapport de transmission arrière à un rapport de transmission avant, l'angle de braquage établi avant le changement de direction de roulage est déjà modifié lorsque la première section (I) du parcours est parcourue.

8. Procédé d'assistance au stationnement à braquage automatique, en particulier système d'assistance à la sortie hors d'un emplacement de stationnement et/ou à l'entrée dans un emplacement de stationnement d'un véhicule, comportant les étapes suivantes :
mesure de données de distance entre le véhicule et son environnement,
détection de la direction de roulage du véhicule par un système anti-blocage et/ou un programme électrique de stabilisation,
détermination de la présence d'un emplacement de stationnement à l'aide des données de distance mesurées,
calcul d'une trajectoire à parcourir lors de la manoeuvre de stationnement dans l'emplacement de stationnement,
commande automatique d'un dispositif de braquage du véhicule lors de la manoeuvre de stationnement en correspondance à la trajectoire calculée, un angle de braquage du dispositif de braquage, établi avant le changement de direction de roulage, étant maintenu sur une première section définie (I) du parcours après un changement, détecté par le détecteur de direction de roulage, de la direction de roulage.

9. Procédé d'assistance au stationnement selon la revendication 8, dans lequel lorsqu'une deuxième section du parcours (II) qui suit la première section (I) du parcours est parcourue, l'angle de braquage est modifié par rapport à l'angle de braquage de la première section (I) du parcours, et en particulier dans lequel l'angle de braquage de la deuxième section (II) du parcours est essentiellement un angle de zéro degré ou présente un signe autre que l'angle de braquage de la première section (I) du parcours.

10. Procédé d'assistance au stationnement selon la revendication 9, dans lequel lorsqu'une troisième section (III) du parcours qui se raccorde à la deuxième section (II) du parcours est parcourue, l'angle de braquage est modifié par rapport à l'angle de braquage de la première section (I) et/ou de la deuxième section (II) du parcours et en particulier, l'angle de braquage de la deuxième section (II) du parcours est essentiellement de zéro degré et l'angle de braquage de la troisième section (III) du parcours présente un autre signe que l'angle de braquage de la première section (I) du parcours.

11. Procédé d'assistance au stationnement selon les revendications 9 ou 10, dans lequel l'angle de braquage est modifié par pas ou de manière continue lorsque la deuxième section (II) et/ou la troisième section (III) du parcours sont parcourues.

12. Procédé d'assistance au stationnement selon l'une des revendications 9 à 11, entre la première section (I) et la deuxième section (II) du parcours et/ou entre la deuxième section (II) et la troisième section (III) du parcours, l'angle de braquage est modifié par pas, par exemple d'un pas de plus de 15°.

13. Procédé d'assistance au stationnement selon l'une des revendications 8 à 12, lorsque le conducteur passe d'un rapport de transmission avant à un rapport de transmission arrière ou d'un rapport de transmission arrière à un rapport de transmission avant, l'angle de braquage établi avant le changement de direction de roulage est déjà modifié lorsque la première section (I) du parcours est parcourue.

14. Procédé d'assistance au stationnement selon l'une des revendications 8 à 13, le procédé d'assistance au stationnement étant interrompu si un parcours parcouru dans des directions de roulage et des sens de transmission opposés dépassent une valeur limite définie.
